# EUROPÄISCHE PATENTSCHRIFT

(11) **EP 1 400 740 B1**
(45) Veröffentlichungstag und Bekanntmachung des Hinweises auf die Patenterteilung: **13.08.2008**
(21) Anmeldenummer: 03020533.0
(22) Anmeldetag: 17.09.2003
(51) Int. Cl.: F16L 25/00, H02G 3/06

(54) **Vorrichtung zum Halten eines Schlauches**
Device for holding a hose
Dispositif de fixation d'un tuyau flexible

(30) Priorität: 21.09.2002 DE 10244027
(43) Veröffentlichungstag der Anmeldung: 24.03.2004
(73) Patentinhaber: KUKA Roboter GmbH, 86165 Augsburg (DE)
(72) Erfinder: Karlinger, Stefan, 86199 Augsburg (DE)
(74) Vertreter: Lempert, Jost

(56) Entgegenhaltungen:
- EP-A- 0 545 410
- DE-U- 29 814 416
- FR-A- 1 286 787
- US-A- 5 015 013
- US-A- 5 984 375

## Beschreibung

Die Erfindung betrifft eine Vorrichtung zum Halten eines flexiblen Schlauches.

Maschinen und insbesondere Industrieroboter weisen flexible Schutzschläuche auf, durch die Versorgungsleitungen, Kabel oder dergleichen, insgesamt als Schlauchpakete bezeichnet, für Einrichtungen der Maschine bzw. des Roboters, insbesondere des an einer Roboterhand angebrachten Werkzeugs geführt sind, die durch den Schutzschlauch zusammengehalten und geschützt werden sollen. Der flexible Schlauch kann zum Teil extremen seitlichen oder Abbiegebewegungen ausgesetzt sein, beispielsweise wenn die am Werkzeug (an der Hand) endenden Versorgungsleitungen oder Kabel durch die Werkzeugbewegung verschiedenartigen Relativbewegungen ausgesetzt sind, denen der sie umgebende Schlauch zu folgen hat. Wenn der Schlauch an seinem dem werkzeugseitigen Ende der Versorgungsleitungen und Kabel abgewandten Ende an einer Feststelle der Maschine oder des Roboters festgelegt ist, können die seitlichen oder Biegebewegungen des Schutzschlauches zu einer Ermüdung und schließlich einem Brechen und einer Beschädigung des Schutzschlauches führen. Um diese Gefahr zu verringern, sind zur Halterung des Schutzschlauches an dem Werkzeug abgewandten Ende Kugelgelenke vorgesehen. Diese haben nur einen geringen Beweglichkeitsbereich und können bei Entlastung (in axialer Richtung) andere Elemente der Schlauchpakete belasten. Außerdem sind sie aufwendig und teurer.

FR-1 286 787 offenbart ein Vorrichtung gemäss dem Oberbegriff des Anspruchs 1

Der Erfindung liegt daher die Aufgabe zugrunde, eine einfach ausgestaltete und preiswerte Entlastungshilfe für einen flexiblen Schlauch zu schaffen, die bei relativ groβer Beweglichkeit und damit der Ermöglichung eines engen Biegeradiusses dennoch eine gute Abstützung eines flexiblen Schlauches bei seitlicher Bewegung oder Abbiegung gewährleistet und derart Verschleißbelastungen des Schlauches reduziert, ohne dass weitere Schlauchpaketkomponenten übermäßig belastet werden.

Die Erfindung wird von den Merkmalen des Anspruchs 1 definiert.

Dadurch dass die den Schlauch zumindestens axial haltende erfindungsgemäße Vorrichtung an zumindestens einer Seite einen Stützbereich mit vorzugsweise trompetenartiger Erweiterung aufweist, wird der Schlauch bei seitlichen oder Abbiegebewegungen abgestützt und damit entlastet; er kann in diesem Bereich nicht abknicken. Bei gleichzeitiger Drehung wälzt sich der Schutzschlauch am Umfang des Radius ab, dabei entsteht keine Reibung, d.h. kein Verschleiß, da die Drehbewegung zwischen Spannschelle und Kugeltülle stattfindet. Der Radius R1 der Erweiterung liegt zumindest im inneren Bereich derselben in der Größenordnung der Mindestbiegeradius des aufzunehmenden Schlauches minus ( - ) dem halben Durchmesser des Schlauches. Der Mindestbiegeradius eines Schlauches ist in der Regel der Tabelle des Schlauchherstellers zu entnehmen. Alternativ kann auch durch Standortversuche bestimmt werden.

Um einen kantenfreien Übergang der erfindungsgemäßen Vorrichtung an freien Enden der Erweiterung zu gewährleisten weißt die Erweiterung unmittelbar vor ihrem stirnseitigen Ende bzw. an diesem einen Radius R2 auf der kleiner als der Radius R1 ist und vorzugsweise 10 % bis 20 % des Radius des inneren Erweiterungsbereichs beträgt. Zwischen einer ersten Rippe zum Halten eines Rippenschlauches und dem innen Erweiterungsbereich liegt vorzugsweise ein zylindrischer Abschnitt. Die Übergänge vom zylindrischen Abschnitt zum inneren Erweiterungsbereich mit Radius R1 und von dort zur Abrundung mit Radius R2 im Bereich des stirnseitigen Endes sind jeweils tangential und damit stetig.

Da in der Regel derartige flexible Schutzschläuche als Rippenschläuche ausgebildet sind, sieht eine bevorzugte Ausgestaltung der Erfindung vor, dass der Haltebereich nach innen gerichtete Ringrippen aufweist. Hierdurch wird in axialer Richtung eine formschlüssige Halterung des Schutzschlauches in der erfindungsgemäßen Vorrichtung erreicht, während, falls gewünscht, gegen ein Verdrehen ein Reib- oder Kraftschluss zwischen der erfindungsgemäßen Vorrichtung und dem Schlauch bewirkt werden kann durch entsprechende Dimensionierung. In weiterer bevorzugter Ausgestaltung ist vorgesehen, dass ein Anbringungsbereich zur Anbringung der Vorrichtung an einem Halteteil vorgesehen ist, wobei das Halteteil vorzugsweise als Schelle ausgebildet ist. Zur Verbindung zwischen erfindungsgemäßer Vorrichtung und Halteteil sieht die Erfindung weiterhin vor, dass der Anbringungsbereich eine äußere Ringnut aufweist, wobei in die Ringnut nach innen gerichtete Ansätze des Halteteils bzw. der Schelle eingreifen, so dass auch hier eine axial formschlüssige Verbindung zwischen Halteteil/Schelle und erfindungsgemäßer Vorrichtung sichergestellt ist.

Damit, insbesondere bei formschlüssiger Verbindung von erfindungsgemäßer Halte-Vorrichtung und Schlauch, insbesondere Rippenschlauch, die erfindungsgemäße Vorrichtung auf den Schlauch aufgesetzt werden kann, sieht die Erfindung in weiterer bevorzugter Ausgestaltung vor, dass eine Ausbildung aus mindestens zwei Teilschalen (Halbschalen) vorgesehen ist. Die einzelnen Teil- oder Halbschalen der erfindungsgemäßen Vorrichtung können dabei radial in verschiedener an sich bekannter Weise zusammengehalten werden, beispielsweise durch Verschrauben oder durch Schnappverbindungen an ihren Stirnseiten. In bevorzugter Ausgestaltung können die Teilschalen durch einen Schließring zusammengehalten werden, der einstückig ausgebildet sein kann und dann auf einen zylinderförmigen Halteabschnitt der erfindungsgemäßen Vorrichtung axial aufgeschoben wird. Der Schließring kann alternativ auch mehrteilig ausgebildet sein, wobei an seinen Stirnseiten Verbindungseinrichtungen ausgebildet sind. Diese können wiederum durch Schnappverbindungseinrichtungen gebildet sein, so dass ein Schließen des Schließringes durch radiales Aufeinanderzubewegen der Einzelteile (Teilringe) erfolgt. In äußerst bevorzugter Ausgestaltung ist aber vorgesehen, dass die Teilringe des Schließrings mittels Schnappausbildungen durch Einschnappen senkrecht zur Symmetrieachse miteinander verbindbar sind, wobei in Schließstellung hintergreifende, komplementäre Formausbildungen an den Stirnseiten der Teilringe des Schließrings und axiale Verbindbarkeit der Formausbildungen und damit Teilringe vorgesehen sind. Ein solcher Schließring ist in der EP 1 400 710 offenbart.

Weiterhin kann in bevorzugter Ausgestaltung vorgesehen sein, dass im Bereich der Teilschalen der erfindungsgemäßen Vorrichtung Formschlüsse, beispielsweise in Form von in Löchern eingreifenden Stiften oder in Nuten eingreifenden Stegen vorhanden sind.

Erfindungsgemäß wird also eine Vorrichtung zum Halten eines Schlauches geschaffen, die diesen gegenüber Beschädigungen schützt, indem unter axialer Halterung beim Abbiegen des Schlauches sich dieser an den Innenradius der Erweiterung des Stützbereichs anlegt und damit durch diesen gestützt und entlastet wird.

Weitere Vorteile und Merkmale der Erfindung ergeben sich aus der nachfolgenden Beschreibung, in der Ausführungsbeispiele der Erfindung unter Bezugnahme auf die Zeichnung im einzelnen erläutert sind. Dabei zeigt:
- Fig. 1: eine erste Ausführungsform einer erfindungsgemäßen Vorrichtung zum Halten eines Rippenschlauches zusammen mit einem solchen und einer die Vorrichtung selbst haltenden Schelle - im Schnitt;
- Fig. 2: eine vergrößerte Schnittdarstellung der Vorrichtung zum Halten des Rippenschlauches gemäß der Figur 1, ebenfalls geschnitten;
- Fig. 3: eine perspektivische Schnittdarstellung der Ausführungsform der Vorrichtung zum Halten eines Rippenschlauches gemäß den Figuren 1 und 2;
- Fig. 4: eine perspektivische Darstellung der Ausführungsform der Vorrichtung zum Halten eines Rippenschlauches gemäß den Figuren 1 bis 3 mit einem die Vorrichtung radial haltenden Schließring, in perspektivischer Darstellung;
- Fig. 5: eine Darstellung der erfindungsgemäßen Halte-Vorrichtung mit Blick auf die Stirnseite einer Halbschale;
- Fig. 6: eine perspektivische Darstellung entsprechend der Figur 4 der weiteren Ausführungsform der erfindungsgemäßen Vorrichtung zum Halten eines Rippenschlauches gemäß der Figur 5; und
- Fig. 7: zeigt eine Seitenansicht einer weiteren Ausführungsform der erfindungsgemäßen Vorrichtung.

Die erfindungsgemäße Vorrichtung 1 dient in der dargestellten Ausführungsform zum Halten eines Rippenschlauches 2. Ein solcher Rippenschlauch 2 ist zumindestens auf seiner Außenseite mit Rippen 2.1 versehen, zwischen denen Ringnuten 2.2 ausgebildet sind.

Zum axialen Halten des Rippenschlauches 2 weist die erfindungsgemäße Vorrichtung 1 einen - inneren - Haltebereich 3 auf, an dem nach innen ragende Ringrippen 3.1 ausgebildet sind. Im dargestellten Ausführungsbeispiel sind zwei Ringrippen vorgesehen. Es können aber auch eine Ringrippe oder mehr als zwei Ringrippen vorgesehen sein. Die Ringrippen 3.1 weisen in die Ringnuten 2.2 des Rippenschlauchs 2 ein und halten diesen dadurch axial fest.

Eine Verdrehsicherheit kann durch einen Reibschluss gegeben sein. Der Rippenschlauch 2 ragt in der Darstellung der Figuren zumindestens nach rechts aus der Vorrichtung 1 heraus.

Um den Rippenschlauch 2 bei einer Abbiegung aufgrund der Bewegung seines der Vorrichtung 1 abgewandten freien Endes zu stützen, schließt sich an den Haltebereich 3 in Richtung der aus der Vorrichtung 1 herausragenden Bereichs des Rippenschlauchs 2 ein Stützbereich 4 der erfindungsgemäßen Vorrichtung 1 an, also in den dargestellten Zeichnungen ebenfalls nach rechts hin vom Haltebereich 3 aus gesehen.

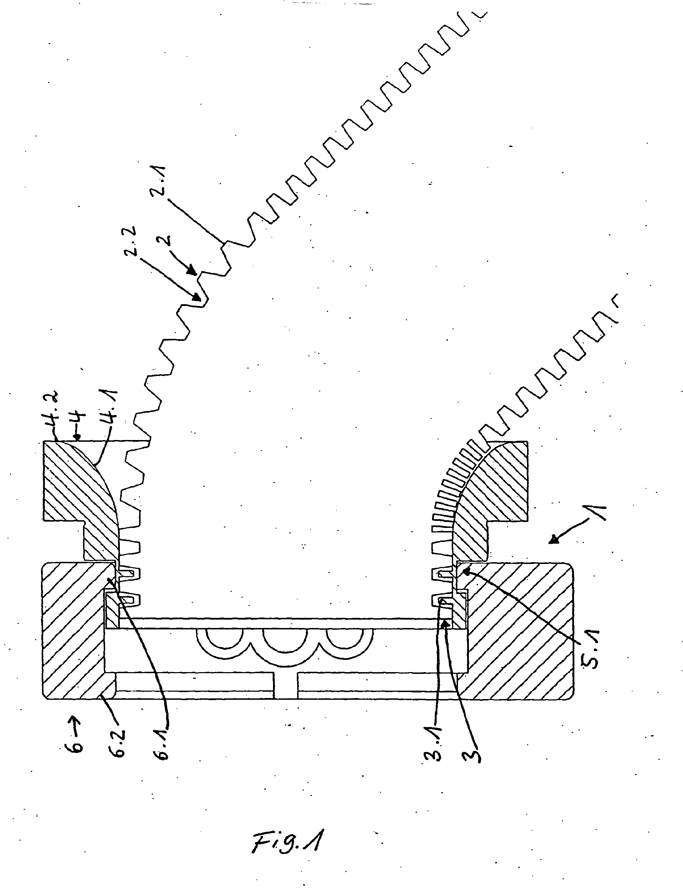

Eine seitliche oder Abbiegebewegung des Rippenschlauches 2, wie sie in der Figur 1 dargestellt ist, kann beispielsweise dann auftreten, wenn der Rippenschlauch 2 als Schutzschlauch für Versorgungsleitungen oder Kabel von Motoren oder einem Werkzeug an einer Roboterhand dient, die letztere vielfältige Bewegungen (in der Regel um drei Achsen) ausführen kann, denen die Versorgungsleitungen oder Kabel und damit auch das freie Ende des Rippenschlauches 2 folgen müssen.

Der Stützbereich 4 der erfindungsgemäßen Vorrichtung 1 weist eine trompetenartige Erweiterung 4.1 auf. Die Erweiterung 4.1 ist damit kontinuierlich, stetig und gegebenenfalls mit sich vom Haltebereich 3 am freien Ende 4.2 des Stützbereichs 4 hin progressiv reduzierendem Krümmungsradius ausgebildet.

Die erfindungsgemäße Vorrichtung 1 ist weiterhin mit einem Anbringungsbereich 5 ausgebildet, über den sie an einem Roboterteil angebracht bzw. festgelegt werden kann. Der Anbringungsbereich 5 weist durch eine äußere Ringnut 5.1 auf, die in einen inneren Ringvorsprung 6.1 einer Befestigungsschelle 6 eingreift und derart die Vorrichtung 1 - und den Rippenschlauch 2 - axial an einer Maschine, an einem Roboter oder dergleichen festlegt, an dem die Schelle 6 befestigt ist. Die Halterung der Vorrichtung 1 in der Schelle 6 erfolgt drehbar, so dass sich die Vorrichtung 1 bei Drehbewegungen des Rippenschlauches 2 mit diesem in der Schelle 6 drehen kann.

Die Schelle 6 mag einen weiteren inneren Ringansatz 6.2 aufweisen, über den ein Endstück eines weiteren Rippenschlauches oder dergleichen festlegbar sind. In dem dargestellten Ausführungsbeispiel der Figuren 1 bis 4 ist der Anbringungsbereich 5 im wesentlichen auf gleicher Achshöhe, radial außerhalb des inneren Haltebereichs 3 ausgebildet; zwischen den Bereichen 3 und 5 kann aber auch ein axialer Versatz bestehen.

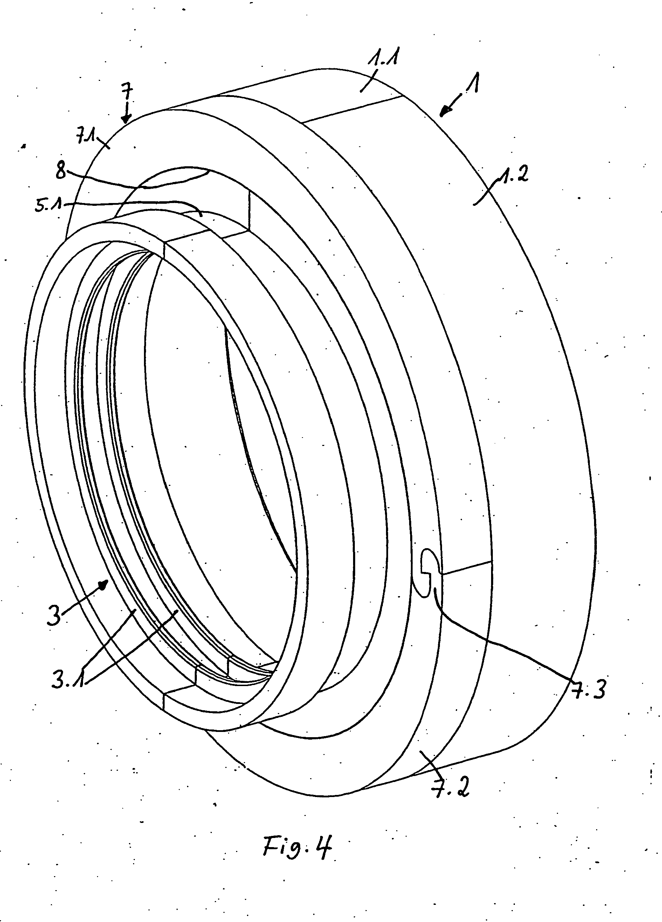

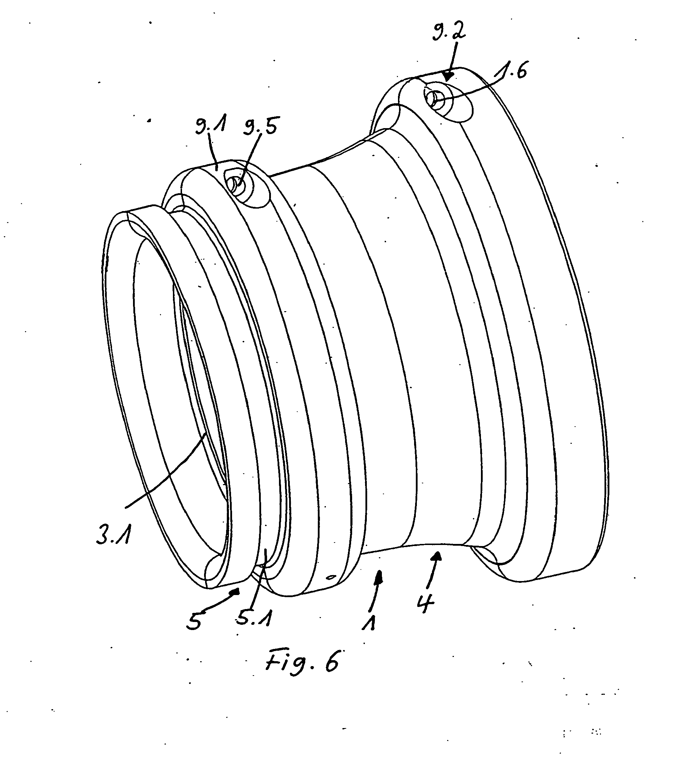

Der Anbringungsbereich 5, Haltebereich 3 und Stützbereich 4 sind einstückig ausgebildet, wobei allerdings die gesamte Vorrichtung in Umfangsrichtung geteilt, d.h. aus mehreren Teilen, vorzugsweise zwei Teilschalen (Halbschalen) ausgebildet ist, wie dies insbesondere den Figuren 4 und 6 entnehmbar ist.

Die beiden Halbschalen können dann in an sich bekannter Weise zusammengehalten sein, beispielsweise durch Schrauben (wie dies in Figur 6 dargestellt ist), durch in Umfangsrichtung wirkende Schnappverschlüsse, die entweder in den Halbschalen selbst oder aber an einem zusätzlichen Schließring ausgebildet sind.

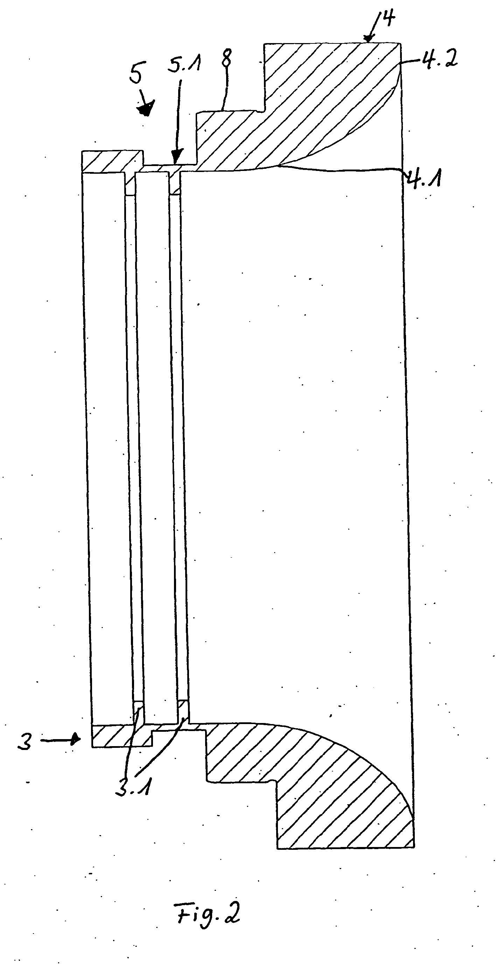

Die Figur 4 zeigt eine weitere Möglichkeit zum Zusammenhalten der Halbschalen 1.1, 1.2 der erfindungsgemäßen Vorrichtung 1, nämlich durch einen Schließring 7, bestehend aus zwei Halbringen 7.1 und 7.2, die an ihren Stirnseiten in Umfangsrichtung wirkende, zueinander komplementäre relativ starre oder feste Formausbildungen 7.3 aufweisen, mittels derer der Schließring 7 geschlossen und damit auch die aus den zwei Halbschalen 1.1 und 1.2 bestehende Vorrichtung 1 zusammenhält. Der Schließring 7 sitzt dabei auf einem Ringabsatz 8 der Vorrichtung 1 (hierzu auch Figur 2) vorzugsweise reibschlüssig auf. Die Verbindung der beiden Hälften 7.1 und 7.2 des Schließrings 7 geschieht dadurch, dass die Formausbildungen 7.3 in axialer Richtung ineinander gesteckt werden. In weiteren Details wird auf die Anlage I verwiesen.

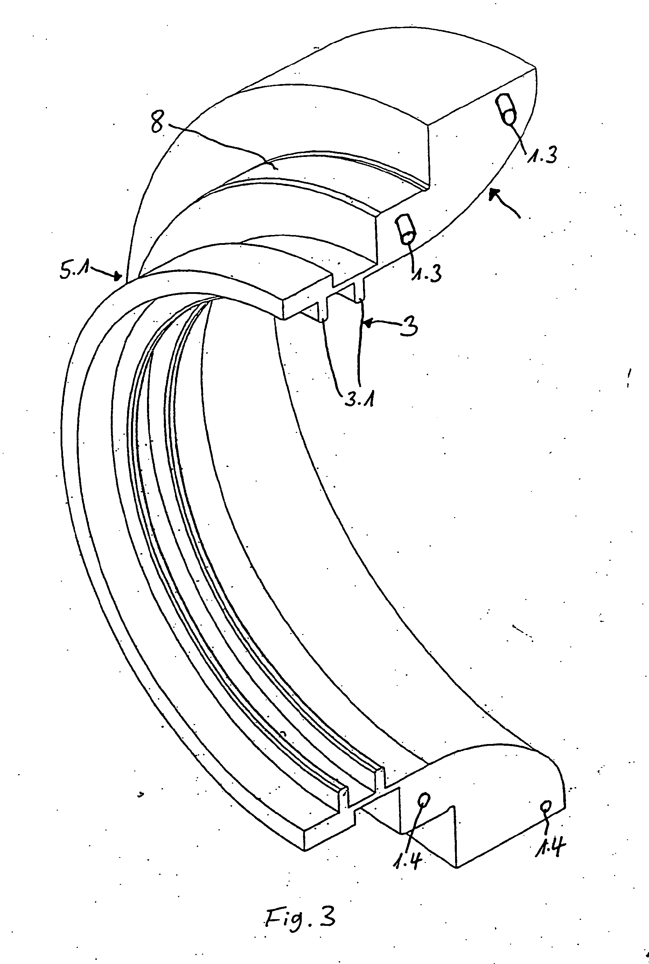

Wie in der Figur 3 dargestellt ist, weisen die Halbschalen 1.1, 1.2 der erfindungsgemäßen Vorrichtung 1 zur Verhinderung einer axialen Relativbewegung zwischen ihnen Formausbildungen auf, die in der Darstellung der Figur 3 als Stifte 1.3 und Löcher 1.4 ausgebildet sind. Schließlich können an den Berührungsbereichen der Halbschalen 1.1, 1.2 auch Rippen 2.1 und Nuten 2.2 vorgesehen sein.

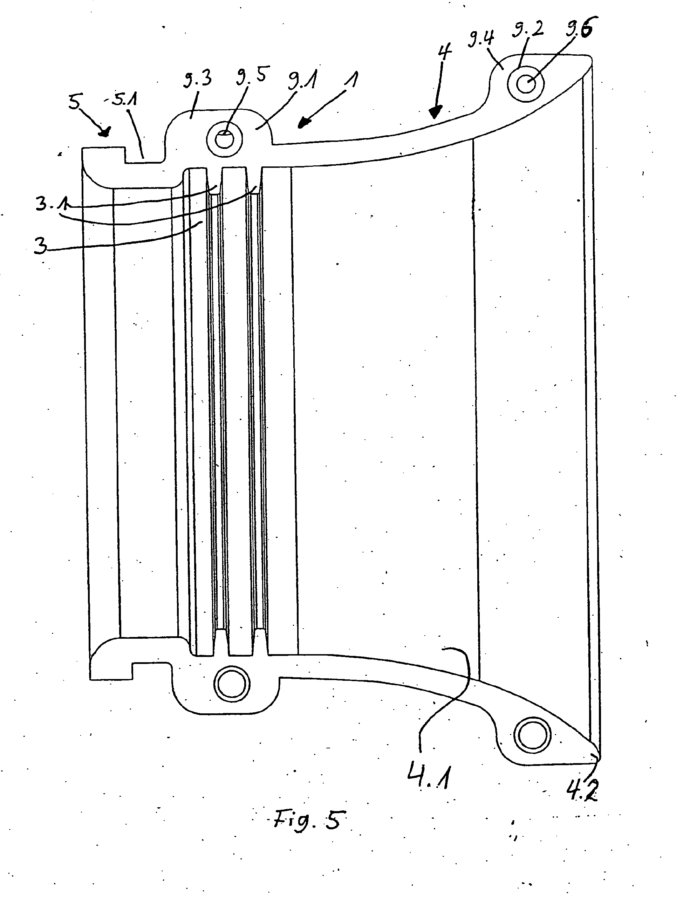

Die Figuren 5 und 6 zeigen eine etwas abgewandelte Ausgestaltung der erfindungsgemäßen Vorrichtung zum Halten eines Rippenschlauches. Soweit gleiche Teile vorhanden sind, werden diese mit gleichen Bezugszeichen versehen und zur Beschreibung wird auf die Beschreibung der Ausgestaltung der Figuren 1 bis 4 verwiesen, so dass im folgenden im wesentlichen lediglich die abweichenden Ausgestaltungen beschrieben werden.

In der Figur 5 weist die erfindungsgemäße Vorrichtung 1 ebenfalls einen Haltebereich 3 für einen Rippenschlauch 2 auf, wobei der Haltebereich 3 ebenfalls zwei nach innen ragende Ringrippen 3.1 aufweist. Einseitig schließt sich weiterhin ein Stützbereich 4 an - eine erfindungsgemäße Vorrichtung kann auch zwei sich beidseitig vom Halteabschnitt 3 aus erstreckende, sich innenseitig nach außen hin erweiternde Stützbereiche aufweisen.

Es ist weiterhin ein Anbringungsbereich 5 mit einer Ringnut 5.1 vorgesehen, der bei der Ausgestaltung der Figuren 5 und 6 relativ zum inneren Haltebereich 3 axial versetzt angeordnet ist, und zwar in Gegenrichtung zum Stützbereich 4.

Die Ausgestaltungen der Figuren 5 und 6 weisen darüber hinaus Befestigungsausbildungen 9.1 und 9.2 auf, die im wesentlichen durch nahe der Trennfläche der Halbschalen 1.1, 1.2 der erfindungsgemäßen Vorrichtung 1 in einem äußeren Ringwulst 9.3, 9.4 ausgebildete Durchbrüche 9.5, 9.6 ausgebildet sind, durch die der Rippenschlauch 2 zum Zusammenhalten der Halbschalen 1.1 und 1.2 der erfindungsgemäßen Vorrichtung 1 hindurchsteckbar sind, die entweder bei entsprechender Ausbildung eines der Durchbrüche in jeweils einer Halbschale durch Einschneiden des Schraubengewindes in das Kunststoff-Material der Vorrichtung 1 festgelegt werden können oder aber durch eine an der Gegenseite vorgesehene mit der Schraube verbindbare Mutter.

Ein weiterer Unterschied der Ausgestaltung der Figuren 5 und 6 liegt darin, dass der Stützbereich 4 langgestreckter ausgebildet ist als bei der Ausgestaltung der Figuren 1 bis 4 und die Krümmungsverhältnisse, ebenfalls bei sich progressiv in Form des Bereichs 3 zur freien Stirnseite hin reduzierendem Krümmungsradius grundsätzlich größer ausgebildet sind, die ab Krümmung des sich trompetenartig erweiternden Bereichs also nicht so stark ist wie bei der Ausgestaltung der Figuren 1 bis 4.

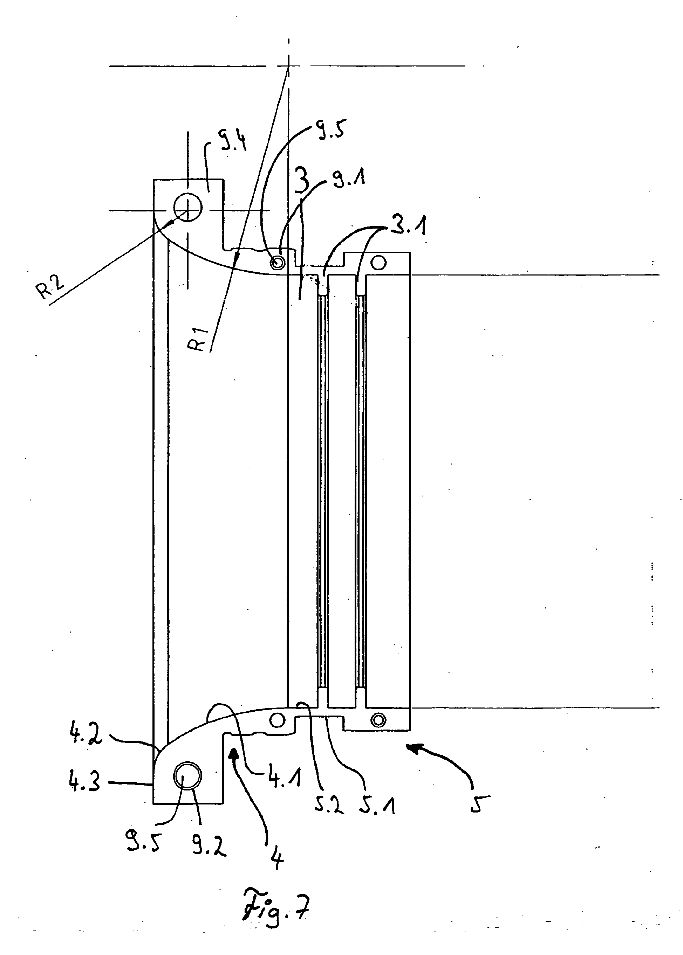

Die Figur 7 zeigt eine weitere Längsschnitt-Darstellung einer erfindungsgemäßen Vorrichtung ähnlich der der Figur 5. Das zu Figur 7 im folgenden gesagte gilt auch für die weiteren Ausgestaltungen der erfindungsgemäßen Vorrichtungen. An die Rippe 3.1 schließt sich zur trompetenartigen Erweiterung 4.1 zunächst ein zylindrischer Bereich 5.2 an, dessen Durchmesser im wesentlichen dem Außendurchmesser des Rippenschlauches entspricht. An diesen läuft der eigentliche oder innere Erweiterungsbereich 4.1. Dieser weist einen Krümmungsradius der Erweiterung R1 auf, der den Mindestbiegeradius des Schlauches minus dem halben Durchmesser des aufzunehmenden Schlauches entspricht. Der Mindestbiegeradius des Schlauches wird in der Regel vom Schlauchhersteller angegeben; alternativ kann er aus Versuchen bestimmt werden. An den inneren Erweiterungsbereich 4.1 schließt sich zur Stirnseite der erfindungsgemäßen Vorrichtung hin eine Abrundung 4.2 im Stirnseitenbereich mit einem Radius R2 an. Der Radius R2 liegt zwischen 10 % und 20 % des Radiuses R1. Hierdurch wird ein kantenfreier Übergang zur Planenstirnfläche 4.3 der Vorrichtung geschaffen.

Die Übergänge zwischen dem zylindrischen Abschnitt 4.5 und dem Erweiterungs- oder Abstützbereich 4.1 sowie zwischen diesen und der äußeren Abrundung sind jeweils tangential und damit stetig.

### Bezugszeichenliste

- 1: Vorrichtung
- 1.1, 1.2: Halbschalen
- 1.3: Stifte
- 1.4: Löcher

- 2: Rippenschlauch
- 2.1: Rippen
- 2.2: Nuten

- 3: Haltebereich
- 3.1: Ringrippen

- 4: Stützbereich
- 4.1: trompetenartige Erweiterung
- 4.2: freies Ende

- 5: Anbringungsbereich
- 5.1: äußere Ringnut

- 6: Befestigungsschelle oder Halteteil
- 6.1: innerer Ringvorsprung
- 6.2: Ringansatz

- 7: Schließring
- 7.1, 7.2: Halteringe
- 7.3: Formausbildungen

- 8: Ringabsatz

- 9.1, 9.2: Befestigungsausbildungen
- 9.3, 9.4: äußerer Ringwulst
- 9.5, 9.6: Durchbrüche

## Patentansprüche

1. Halteteil (6) und Vorrichtung (1) zum Halten eines flexiblen Schlauches (2), mit wenigstens einem Haltebereich (3) zum zumindest axialen Halten des Schlauches (2) und mit zumindest einem einseitigen, sich zum freien Ende (4.2) hin erweiternden, den Schlauch (2) umgebenden Stützbereich (4), wobei die Vorrichtung einen Anbringungsbereich (5) zur Anbringung derselben an dem Halteteil (6) aufweist, **dadurch gekennzeichnet, dass** der Anbringungsbereich (5) eine äußere Ringnut (5.1) aufweist, in welche ein nach innen gerichteter Ansatz (6.1) des Halteteils (6) derart eingreift, um die Vorrichtung (1) axial, aber drehbar an dem Halteteil (6) festzulegen.

2. Vorrichtung nach Anspruch 1, **dadurch gekennzeichnet, dass** der Haltebereich (3) nach innen gerichtete Ringrippen (3.1) aufweist.

3. Vorrichtung nach Anspruch 1 oder 2, **dadurch gekennzeichnet, dass** das Halteteil (6) als Befestigungsschelle ausgebildet ist.

4. Vorrichtung nach einem der Ansprüche 1 bis 3, **dadurch gekennzeichnet, dass** der Stützbereich eine trompetenartige Erweiterung (4.1) aufweist.

## Claims

1. A retaining element (6) and device (1) for retaining a flexible tube (2), having at least one retaining area (3) for at least axial retention of the tube (2) and having at least one unilateral supporting area (4) which widens towards the free end (4.2) and surrounds the tube (2), the device comprising a mounting area (5) for mounting the same on the retaining element (6), **characterised in that** the mounting area (5) comprises an external annular groove (5.1), in which an inwardly directed shoulder (6.1) of the retaining element (6) engages in such a way as to fix the device (1) axially but rotatably on the retaining element (6).

2. A device according to claim 1, **characterised in that** the retaining area (3) comprises inwardly directed annular ribs (3.1).

3. A device according to claim 1 or claim 2, **characterised in that** the retaining element (6) takes the form of a fixing clamp.

4. A device according to any one of claims 1 to 3, **characterised in that** the supporting area widens (4.1) in the manner of a trumpet.

## Revendications

1. Pièce de retenue (6) et dispositif (1) pour retenir un tuyau flexible(2), avec au moins une zone de retenue (3) pour retenir le tuyau flexible (2) au moins dans le sens axial et avec au moins une zone soutènement (4) unilatérale, s'élargissant vers son extrémité libre (4.2) et enveloppant le tuyau flexible (2), ledit dispositif présentant une zone d'attache (5) pour attacher ce dernier à la pièce de retenue (6), de laquelle un téton (6.1) de la pièce de retenue (6), tourné vers l'intérieur, prend prise de manière à fixer le dispositif (1) dans le sens axial, mais de façon néanmoins mobile à la pièce de retenue (6).

2. Dispositif selon la revendication 1, **caractérisé en ce que** la zone de retenue (3) présente des nervures annulaires (3.1) tournées vers l'intérieur.

3. Dispositif selon une des revendications 1 ou 2,
**caractérisé en ce que** la pièce de retenue (6) est formée par un collier de fixation.

4. Dispositif selon une des revendications 1 à 3,
**caractérisé en ce que** la zone de soutènement présente un élargissement en forme de trompette (4.1).
